# EUROPEAN PATENT SPECIFICATION

(11) **EP 3 638 898 B1**
(45) Date of publication and mention of the grant of the patent: **14.09.2022**
(21) Application number: 18733169.9
(22) Date of filing: 12.06.2018
(51) Int. Cl.: F03D 1/06

(54) **LEADING EDGE PROTECTION FOR A WIND TURBINE BLADE**
EINTRITTSKANTENSCHUTZ FÜR EINE WINDTURBINENSCHAUFEL
PROTECTION DE BORD D'ATTAQUE POUR PALE D'ÉOLIENNE

(30) Priority: 16.06.2017 DK PA201770466
(43) Date of publication of application: 22.04.2020
(73) Proprietor: Vestas Wind Systems A/S, 8200 Aarhus N (DK)
(72) Inventor: GRASSO, Francesco, Southampton Hampshire SO14 3LN (GB)
(74) Representative: Vestas Patents Department
(86) International application number: PCT/DK2018/050131
(87) International publication number: WO 2018/228647

(56) References cited:
- EP-A1- 2 253 834
- EP-A1- 3 098 438
- WO-A1-2016/075619
- WO-A1-2017/012632

## Description

### Technical Field

The present invention relates to a leading edge protection for a wind turbine blade. In particular, the present invention relates to a wind turbine blade assembly comprising a blade and a leading edge shield.

### Background

Wind turbine blades are susceptible to erosion and it is known to provide a protective cover over the leading edge of the blade. Such a cover is known as a "leading edge shield" and the leading edge shield covers the leading edge of the blade and a portion of the suction surface and the pressure surface. The shield has a suction side edge and a pressure side edge where the shield meets the suction surface and the pressure surface respectively.

Leading edge shields have a defined thickness (such as 2mm) and hence there is a step down from the shield to the suction/pressure surfaces. This step can act as a trip such that in use, the boundary layer over the blade is tripped from a laminar flow to a turbulent flow which can degrade the aerodynamic performance of the blade. Various methods have been employed to reduce the step from the shield to the blade, such as chamfering the edge of the shield or using a filler material between the shield and the blade. However, these methods may still result in a reduced aerodynamic performance and they can be costly to implement in production.

EP3098438 describes a wind turbine blade with a metallic leading edge strip to protect the leading edge of the blade from erosion. WO2016075619 described a protective cover for a wind turbine blade formed from a polyurethane material. EP2253834 describes a wind turbine blade having a section with an inherent non-ideal twist.

### Summary of Invention

According to a first aspect of the present invention there is provided a wind turbine blade assembly comprising a blade and a leading edge shield; the blade comprising an airfoil with a suction surface, a pressure surface and an airfoil thickness between the suction surface and the pressure surface, a leading edge and a trailing edge and a chord length extending between the leading edge and the trailing edge; the leading edge shield being attached to the blade and covering the leading edge of the blade, the leading edge shield comprising: a suction side edge located on the suction surface of the blade; a pressure side edge located on the pressure surface of the blade; an inner surface extending from the suction side edge to the pressure side edge, the inner surface being attached to the blade; an outer surface, facing away from the inner surface; the leading edge shield forming a leading edge of the wind turbine blade assembly; wherein at a position on the blade where the chord length is 1 meter, the leading edge of the wind turbine blade assembly is located at 0.04% to 7% chord forward of the blade leading edge and located below the blade leading edge toward the pressure surface .

Preferably, the leading edge of the wind turbine blade assembly is located at 1.5% to 6% chord forward of the blade leading edge.

The leading edge of the wind turbine blade assembly may be located below the blade leading edge up to 50% of the airfoil negative thickness. The leading edge of the wind turbine blade assembly may be located below the blade leading edge between 3% to 20% of the airfoil negative thickness.

Preferably, the leading edge shield has a varying thickness distribution. The thickness distribution may be asymmetric about a centre point of the shield.

The shield may have a varying thickness distribution defined between the inner surface and the outer surface and the shield has a maximum thickness at a location between the suction side edge and the pressure side edge; and the shield has a centre point between the suction side edge and the pressure side edge and the thickness distribution is asymmetric about the centre point.

The maximum thickness may be a local maximum. Or, the thickness distribution may have an area of constant maximum thickness extending over a width of the shield.

The area of constant maximum thickness is asymmetric about the centre point. The area of constant maximum thickness may extend up to 95% of the width between the suction side edge and the pressure side edge.

Preferably, when moving from the position of maximum thickness towards the suction side edge the thickness of the shield does not increase; and when moving from the position of maximum thickness towards the pressure side edge the thickness of the shield does not increase.

Preferably, there are no discontinuities in the thickness distribution between the suction side edge and the pressure side edge.

The shield may comprise a tape. Or, the shield may comprise a cast polymer.

### Brief description of the drawings

In order that the present invention may be more readily understood, examples of the invention will now be described, by way of example only, and with reference to the following Figures, in which:
Figure 1 is a schematic view of a wind turbine;
Figure 2 is a perspective view of a wind turbine blade;
Figure 3 shows a cross section of the wind turbine blade;
Figure 4 shows a cross section of the wind turbine blade with a leading edge shield attached.
Figure 5 to 7 are examples of leading edge shields.

### Detailed Description

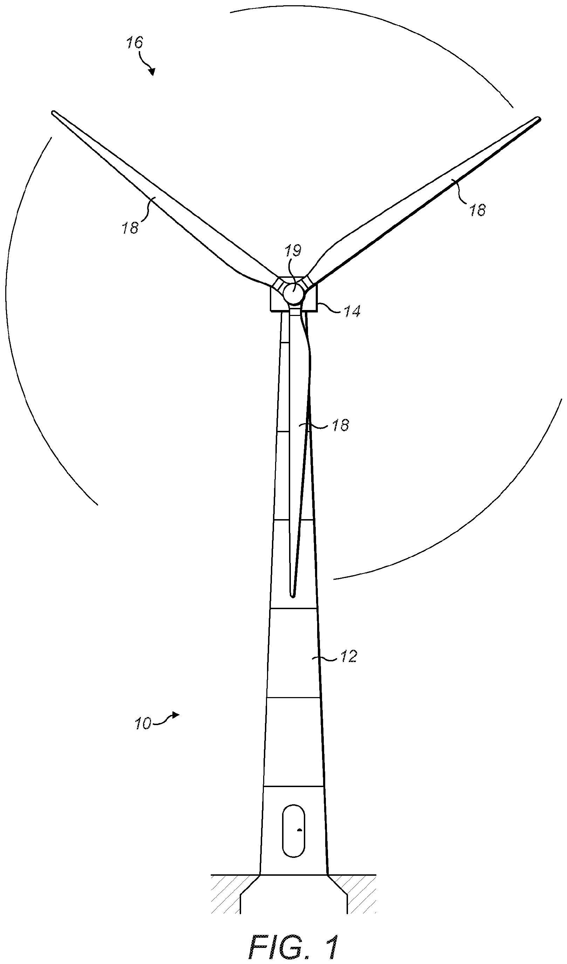

Figure 1 shows a horizontal axis wind turbine 10. The wind turbine 10 comprises a tower 12 supporting a nacelle 14 to which a rotor 16 is mounted. The rotor 16 comprises a plurality of wind turbine blades 18 that extend radially from a central hub 19. In this example, the rotor 16 comprises three blades 18.

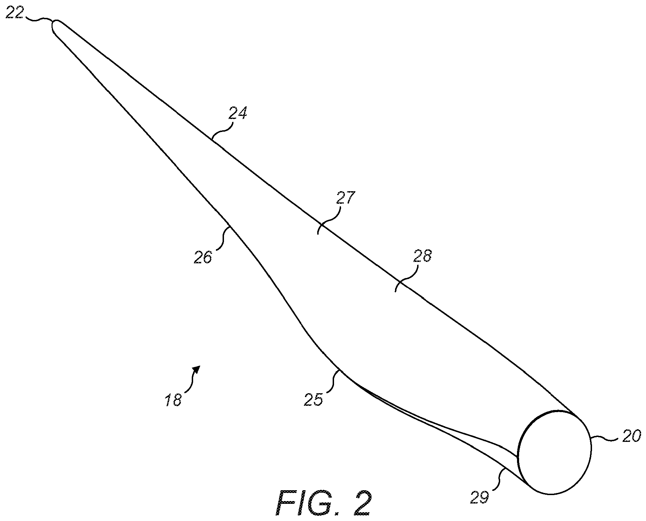

Figure 2 is a view of one of the blades 18 of the wind turbine 10. The blade 18 extends from a generally circular root end 20 to a tip end 22 in a longitudinal 'spanwise' direction, and between a leading edge 24 and a trailing edge 26 in a transverse 'chordwise' direction. The blade 18 comprises a shell 27 formed primarily of fibre-reinforced plastic (FRP). The blade 18 comprises a suction surface 28 and a pressure surface 29.

The blade 18 transitions from a circular profile to an airfoil profile moving from the root end 20 of the blade 18 towards a shoulder 25 of the blade 18, which is the widest part of the blade 18 where the blade 18 has its maximum chord. The blade 18 has an airfoil profile of progressively decreasing thickness in an outboard portion of the blade 18, which extends from the shoulder 25 to the tip 22 of the blade 18.

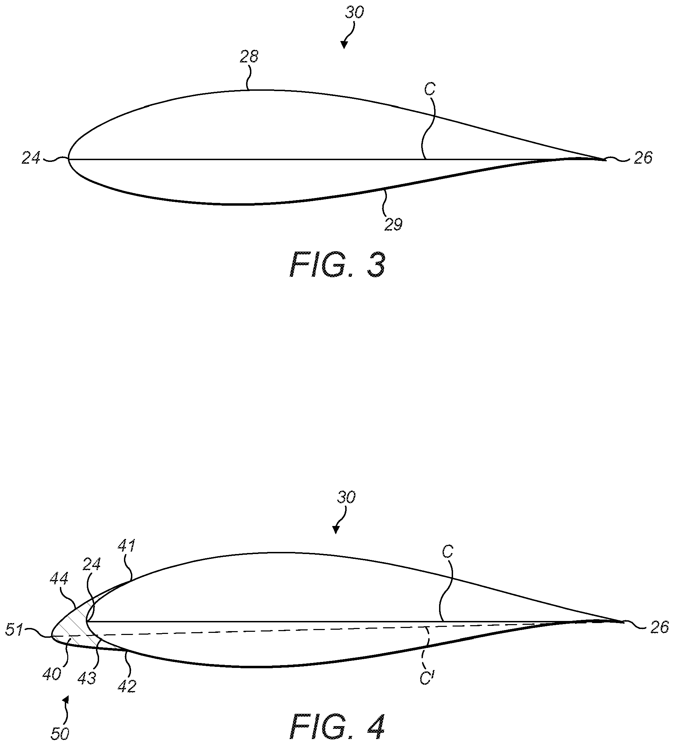

Figure 3 shows an airfoil 30 used on the blade 18. The airfoil comprises a leading edge 24 and a trailing edge 26 as noted above, and a chord C which extends from the leading edge to the trailing edge. The airfoil has a thickness between the suction surface 28 and the pressure surface 29 which is the maximum distance between the suction surface and the pressure surface measured perpendicular to the chord line.

Figure 4 shows the airfoil 30 with a leading edge shield 40 according to the invention. The combination of the leading edge shield 40 and the blade 18 is herein referred to a wind turbine blade assembly.

The leading edge shield 40 is attached to the blade and covers the leading edge of the blade along with a portion of the suction surface and the pressure surface. The shield 40 comprises a suction side edge 41 located on the suction surface 28 of the blade and a pressure side edge 42 located on the pressure surface of the blade. The shield comprises an inner surface 43 extending from the suction side edge to the pressure side edge and which faces toward the blade 18. The inner surface is attached to the blade by adhesive or double sided tape for example. Opposite to the inner surface 43 is an outer surface 44 which faces away from the inner surface, that is into the oncoming wind.

The leading edge shield 40 protects the underlying surface of the blade 18 from erosion damage. In particular, it protects the blade from damage caused by dust, debris and precipitation. The leading edge shield is used in particular at the outboard region of the blade 18, that is toward the tip where the relative speed of the blade is high.

The leading edge shield 40 when attached to the blade 18 forms a blade assembly 50. This blade assembly has a leading edge 51 which is in a different location to the leading edge 24 of the blade 18.

In particular, the leading edge shield 40 can be applied at a position on the blade where the chord length is 1 meter. In this case the leading edge 51 of the blade assembly 50 is located at a position on the blade which is 0.04% to 7% of the chord C forward of the blade leading edge 24 and located below the blade leading edge 24 toward the pressure surface. "Below the blade leading edge" means in the down direction with respect to Figure 4.

As the blade assembly leading edge 51 is offset from the blade leading edge 24 (in particular, it is located below the blade leading edge 24) the blade assembly has a chord C' which is not aligned with the chord C of the blade 18. The new leading edge position 51 of the blade assembly acts to add camber to the blade 18 which changes the aerodynamic properties of the blade.

When a conventional leading edge shield is applied to a wind turbine blade there will be a decrease in the aerodynamic performance of the blade, in particular the lift to drag ratio will be reduced. With the blade assembly as shown, there is a new leading edge position and the aerodynamics are improved such that the lift to drag ratio is greater than when a conventional leading edge shield is used. This is because the camber of the blade is being changed which will compensate for any drag increase associated with the leading edge shield.

In an example, the leading edge 51 of the blade assembly 50 may located at 1.5% to 6% chord forward of the blade leading edge 24. The leading edge 51 of the blade assembly 50 is also located below the blade leading edge 24 up to 50% of the airfoil negative thickness. The airfoil negative thickness is the maximum thickness of the airfoil between the chord line and the pressure surface 29. In a preferred example the leading edge 51 of the blade assembly 50 is located at 3% to 20% of the airfoil negative thickness below the blade leading edge 24.

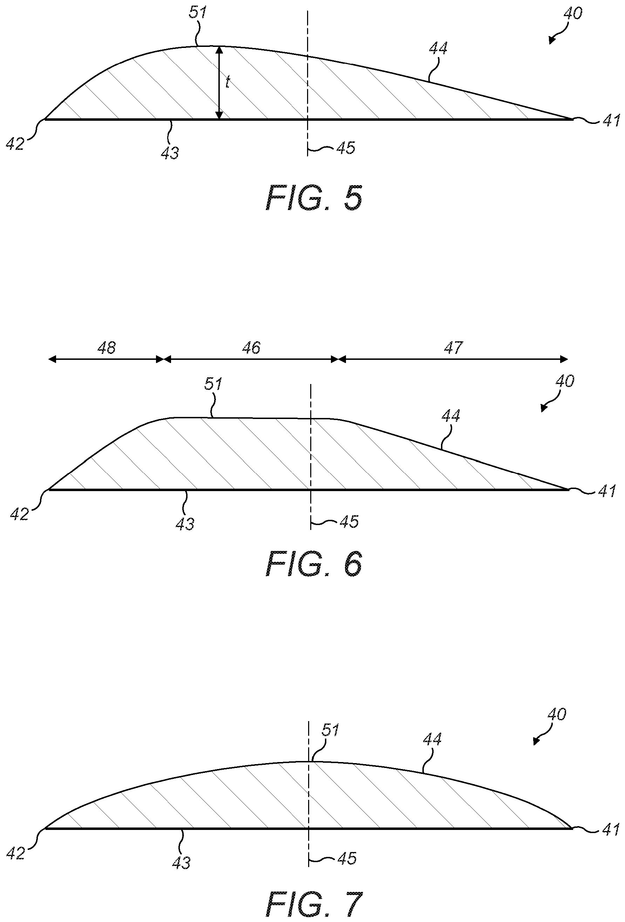

Figure 5 shows an example of the shield 40, in cross section. In this example the shield is a formed as a flat tape which is then wrapped around the blade to adopt to the contours of the leading edge of the blade. In other examples, the shield may be a cast component (cast from a suitable material such as a Thermoplast e.g. vinyl or thermoplastic polyurethane; or a thermoset such as polyurethane) which is moulded to the shape of the leading edge.

The tape which forms the shield 40 is formed from a Thermoplast e.g. vinyl or thermoplastic polyurethane; or a thermoset such as polyurethane. The shield 40 has a suction side edge 41 for attachment to the suction surface 28 of the wind turbine blade and a pressure side edge 42 for attachment to the pressure surface 29 of the wind turbine blade. As noted above, an inner surface 43 extends from the suction side edge 41 to the pressure side edge 42 and this inner surface is bonded to the blade 18. The outer surface 44 which faces away from the inner surface 43 comprises the new leading edge 51 of the blade assembly 50.

The shield 40 has a varying thickness distribution defined between the inner surface 43 and the outer surface 44. The thickness is shown as 't' in Figure 5. The shield has a maximum thickness at a location between the suction side edge 41 and the pressure side edge 42. The direction between the suction side edge 41 and the pressure side edge 42 is herein referred to as a width direction.

The shield has a centre point 45 which is halfway (in the width direction) between the suction side edge 41 and the pressure side edge 42 and the thickness distribution is asymmetric about the centre point 45. In this example, the position of maximum thickness of the shield is not located at the same position as the centre point 45. In the example of Figure 5, the shield 40 has a point of maximum thickness which is a local maximum. In other words, the thickness of the shield decreases each side of the point of maximum thickness.

In another example shown in Figure 6, the shield 40 has an area of constant thickness 46 which extends along the width of the shield. This area of constant thickness may be up to 95% of the width of the shield 40. The shield 40 of Figure 6 comprises a first tapered section 47 which extends from the suction edge 41 to the maximum thickness, and a second tapered section 48 which extends from the pressure edge 42 to the maximum thickness. The first tapered section 46 has a greater width than the width of the second tapered section 47. As per the example of Figure 5, the shield 40 is asymmetric about the centre point 45.

Referring back to Figure 5, shield 40 has a point of maximum thickness which is a local maximum and the thickness of the shield decreases each side of the point of maximum thickness. By "local maximum" it is meant that the shield does not have an area of constant thickness.

It should be noted that the shields 40 as described have a position of maximum thickness between the suction side edge 41 and the pressure side edge 42. Either side of the position of maximum thickness the shield has a decreasing thickness (and in the case of Figure 6 an area of constant thickness). In other words, between the position of maximum thickness and the suction side edge 41 and the pressure side edge 42 the shield does not increase in thickness. Or to put it another way, when moving from the position of maximum thickness towards the suction side edge the thickness of the shield does not increase; and when moving from the position of maximum thickness towards the pressure side edge the thickness of the shield does not increase. This provides for an outer surface 44 that has good aerodynamic properties.

The thickness distribution is preferably 'smooth' between the position of maximum thickness and the suction side edge 41 and the pressure side edge 42. That is there are no step changes in the thickness distribution. For example, referring to Figure 6, the tapered sections 47 and 48 blend into the area of constant thickness 46. Or to put it another way there are no discontinuities in the thickness distribution between the suction side edge 41 and the pressure side edge 42. This also provides for an outer surface 44 that has good aerodynamic properties. When the shield is in the form of a tape it may have a thickness of up to 1mm for example, such as 0.4mm. When the shield is in the form of a cast component it may have a thickness of 5mm for example.

When the asymmetric shields which are shown in Figures 5 and 6 are applied to the leading edge of a wind turbine blade this will have the effect of moving the leading of edge away, and in particular, toward the pressure side compared with the existing leading edge.

It is also possible to modify the position of the leading edge of the blade by using a shield which is not asymmetric. Such a symmetrical shield is shown in Figure 7. The shield has a varying thickness distribution and when it mounted to the blade the suction side edge 41 and the pressure side edge will not be aligned at the same chordwise locations on the respective suction and pressure surfaces. For example, the suction side edge 41 may be placed at 20% chord as measured from the leading edge 24, and the pressure side edge 42 may be placed at 40% chord as measured from the leading edge 24. This has the effect of moving the leading edge 51 of the blade assembly downwards toward the pressure side and hence increasing the camber of the blade.

For any of the shields 40 shown in Figures 5, 6 or 7, when mounted on the blade, the suction side edge 41 may be positioned at up to 40% chord as measured from the leading edge 24. Similarly, the pressure side may edge 42 may be positioned at up to 40% chord as measured from the leading edge 24.

Many modifications may be made to the examples described above without departing from the scope of the present invention as defined in the accompanying claims.

## Claims

1. A wind turbine blade assembly (50) comprising a blade (18) and a leading edge shield (40);
the blade comprising an airfoil (30) with a suction surface (28), a pressure surface (29) and an airfoil thickness between the suction surface and the pressure surface, a leading edge (24) and a trailing edge (26) and a chord length extending between the leading edge and the trailing edge;
the leading edge shield (40) being attached to the blade (18) and covering the leading edge (24) of the blade, the leading edge shield comprising:
a suction side edge (41) located on the suction surface (28) of the blade;
a pressure side edge (42) located on the pressure surface (29) of the blade;
an inner surface (43) extending from the suction side edge to the pressure side edge, the inner surface being attached to the blade (18);
an outer surface (44), facing away from the inner surface;
the leading edge shield (40) forming a leading edge of the wind turbine blade assembly;
**characterised in that** at a position on the blade (18) where the chord length is 1 meter, the leading edge (51) of the wind turbine blade assembly (50) is located at 0.04% to 7% chord forward of the blade leading edge (24) and located below the blade leading edge toward the pressure surface (29).

2. A wind turbine blade assembly according to claim 1, wherein the leading edge (51) of the wind turbine blade assembly is located at 1.5% to 6% chord forward of the blade leading edge (24) .

3. A wind turbine blade assembly according to claim 1 or claim 2, wherein the leading edge (51) of the wind turbine blade assembly is located below the blade leading edge (24) up to 50% of the airfoil negative thickness.

4. A wind turbine blade assembly according to any one of the preceding claims, wherein the leading edge (51) of the wind turbine blade assembly is located below the blade leading edge (24) between 3% to 20% of the airfoil negative thickness.

5. A wind turbine blade assembly according to any one of the preceding claims, wherein the leading edge shield (40) has a varying thickness distribution

6. A wind turbine blade assembly according to claim 5, wherein the thickness distribution is asymmetric about a centre point (45) of the shield (40).

7. A wind turbine blade assembly according to claim 1 wherein the shield (40) has a varying thickness distribution defined between the inner surface (43) and the outer surface (44) and the shield has a maximum thickness at a location between the suction side edge and the pressure side edge; and
the shield has a centre point (45) between the suction side edge (41) and the pressure side edge (42) and the thickness distribution is asymmetric about the centre point.

8. A wind turbine blade assembly according to claim 7, wherein the maximum thickness is a local maximum.

9. A wind turbine blade assembly according to claim 7, wherein the thickness distribution has an area of constant maximum thickness extending over a width of the shield (40).

10. A wind turbine blade assembly according to claim 9, wherein the area of constant maximum thickness is asymmetric about the centre point (45).

11. A wind turbine blade assembly according to claim 9 or claim 10, wherein the area of constant maximum thickness extends up to 95% of the width between the suction side edge (41) and the pressure side edge (42).

12. A wind turbine blade assembly according to any one of claims 7 to 11, wherein when moving from the position of maximum thickness towards the suction side edge the thickness of the shield does not increase; and when moving from the position of maximum thickness towards the pressure side edge the thickness of the shield does not increase.

13. A wind turbine blade assembly according to any one of claims 7 to 12, wherein there are no discontinuities in the thickness distribution between the suction side edge (41) and the pressure side edge (42).

14. A wind turbine blade assembly according to any one of claims 1 to 13, wherein the shield (40) comprises a tape.

15. A wind turbine blade assembly according to any one of claims 1 to 13, wherein the shield (40) comprises a cast polymer.

## Patentansprüche

1. Windkraftanlagenblattanordnung (50), umfassend ein Blatt (18) und ein Anströmkantenschild (40);
wobei das Blatt ein aerodynamisches Profil (30) mit einer Saugoberfläche (28), einer Druckoberfläche (29) und eine Dicke des aerodynamischen Profils zwischen der Saugoberfläche und der Druckoberfläche umfasst, eine Anströmkante (24) und eine Blatthinterkante (26) und eine Sehnenlänge, die sich zwischen der Anströmkante und der Blatthinterkante erstreckt;
wobei das Anströmkantenschild (40) an dem Blatt (18) befestigt ist, und die Anströmkante (24) des Blattes abdeckt, wobei das Anströmkantenschild umfasst:
eine saugseitige Kante (41), die sich an der Saugoberfläche (28) des Blattes befindet;
eine windzugewandte Kante (42), die sich an der Druckoberfläche (29) des Blattes befindet;
eine innere Oberfläche (43), die sich von der saugseitigen Kante zur windzugewandte Kante erstreckt, wobei die innere Oberfläche an dem Blatt (18) befestigt ist;
eine äußere Oberfläche (44), die von der inneren Oberfläche abgewandt ist;
wobei das Anströmkantenschild (40) eine Anströmkante der Windkraftanlagenblattanordnung bildet;
**dadurch gekennzeichnet, dass** sich an einer Stelle des Blattes (18), an der die Sehnenlänge 1 Meter beträgt, die Anströmkante (51) der Windkraftanlagenblattanordnung (50) 0,04% bis 7% der Sehne vor der Anströmkante (24) befindet und unterhalb der Anströmkante zur Druckoberfläche (29) hin befindet.

2. Windkraftanlagenblattanordnung nach Anspruch 1, wobei sich die Anströmkante (51) der Windkraftanlagenblattanordnung 1,5% bis 6% der Sehne vor der Anströmkante (24) befindet.

3. Windkraftanlagenblattanordnung nach Anspruch 1 oder Anspruch 2, wobei sich die Anströmkante (51) der Windkraftanlagenblattanordnung unterhalb der Blattanströmkante (24) bis zu 50% der negativen Dicke des aerodynamischen Profils befindet.

4. Windkraftanlagenblattanordnung nach einem der vorstehenden Ansprüche, wobei sich die Anströmkante (51) der Windkraftanlagenblattanordnung unterhalb der Blattanströmkante (24) zwischen 3% bis 20% der negativen Dicke des aerodynamischen Profils befindet.

5. Windkraftanlagenblattanordnung nach einem der vorstehenden Ansprüche, wobei das Anströmkantenschild (40) eine variierende Dickenverteilung aufweist

6. Windkraftanlagenblattanordnung nach Anspruch 5, wobei die Dickenverteilung um einen Mittelpunkt (45) des Schildes (40) herum asymmetrisch ist.

7. Windkraftanlagenblattanordnung nach Anspruch 1, wobei das Schild (40) eine variierende Dickenverteilung aufweist, die zwischen der inneren Oberfläche (43) und der äußeren Oberfläche (44) verteilt ist, und das Schild eine maximale Dicke an einer Stelle zwischen der saugseitigen Kante und der druckseitigen Kante aufweist; und
das Schild einen Mittelpunkt (45) zwischen der saugseitigen Kante (41) und der druckseitigen Kante (42) aufweist, und die Dickenverteilung um den Mittelpunkt herum asymmetrisch ist.

8. Windkraftanlagenblattanordnung nach Anspruch 7, wobei die maximale Dicke ein lokales Maximum ist.

9. Windkraftanlagenblattanordnung nach Anspruch 7, wobei die Dickenverteilung ein Gebiet von konstanter maximaler Dicke aufweist, das sich über eine Breite des Schildes (40) erstreckt.

10. Windkraftanlagenblattanordnung nach Anspruch 9, wobei das Gebiet von konstanter maximaler Dicke um den Mittelpunkt (45) herum asymmetrisch ist.

11. Windkraftanlagenblattanordnung nach Anspruch 9 oder Anspruch 10, wobei sich das Gebiet von konstanter maximaler Dicke bis zu 95% der Breite zwischen der saugseitigen Kante (41) und der druckseitigen Kante (42) erstreckt.

12. Windkraftanlagenblattanordnung nach einem der Ansprüche 7 bis 11, wobei die Dicke des Schildes, wenn es sich von der Stelle der maximalen Dicke zur saugseitigen Kante erstreckt, nicht zunimmt; und wenn es sich von der Stelle der maximalen Dicke zur druckseitigen Kante erstreckt, die Dicke des Schildes nicht zunimmt.

13. Windkraftanlagenblattanordnung nach einem der Ansprüche 7 bis 12, wobei keine Unterbrechungen in der Dickenverteilung zwischen der saugseitigen Kante (41) und der druckseitigen Kante (42) vorhanden sind.

14. Windkraftanlagenblattanordnung nach einem der Ansprüche 1 bis 13, wobei das Schild (40) ein Band umfasst.

15. Windkraftanlagenblattanordnung nach einem der Ansprüche 1 bis 13, wobei das Schild (40) ein gegossenes Polymer umfasst.

## Revendications

1. Ensemble pale d'éolienne (50) comprenant une pale (18) et une protection de bord d'attaque (40) ;
la pale comprenant un profil aérodynamique (30) avec une surface sous le vent (28), une surface au vent (29) et une épaisseur du profil aérodynamique entre la surface sous le vent et la surface au vent, un bord d'attaque (24) et un bord de fuite (26) et une longueur de corde s'étendant entre le bord d'attaque et le bord de fuite ;
la protection de bord d'attaque (40) étant attachée à la pale (18) et couvrant le bord d'attaque (24) de la pale, la protection de bord d'attaque comprenant :
un bord face sous le vent (41) situé sur la surface sous le vent (28) de la pale ;
un bord face au vent (42) situé sur la surface au vent (29) de la pale ;
une surface intérieure (43) s'étendant du bord face sous le vent au bord face au vent, la surface intérieure étant attachée à la pale (18) ;
une surface extérieure (44), à l'opposé de la surface intérieure ;
la protection de bord d'attaque (40) formant un bord d'attaque de l'ensemble pale d'éolienne ;
**caractérisé en ce que**, à une position sur la pale (18) où la longueur de corde est de 1 mètre, le bord d'attaque (51) de l'ensemble pale d'éolienne (50) est situé à 0,04 % à 7 % de corde en avant du bord d'attaque de pale (24) et situé en dessous du bord d'attaque de pale vers la surface au vent (29).

2. Ensemble pale d'éolienne selon la revendication 1, dans lequel le bord d'attaque (51) de l'ensemble pale d'éolienne est situé à 1,5 % à 6 % de corde en avant du bord d'attaque de pale (24).

3. Ensemble pale d'éolienne selon la revendication 1 ou la revendication 2, dans lequel le bord d'attaque (51) de l'ensemble pale d'éolienne est situé en dessous du bord d'attaque de pale (24) jusqu'à 50 % de l'épaisseur négative du profil aérodynamique.

4. Ensemble pale d'éolienne selon l'une quelconque des revendications précédentes, dans lequel le bord d'attaque (51) de l'ensemble pale d'éolienne est situé en dessous du bord d'attaque de pale (24) entre 3 % à 20 % de l'épaisseur négative du profil aérodynamique.

5. Ensemble pale d'éolienne selon l'une quelconque des revendications précédentes, dans lequel la protection de bord d'attaque (40) présente une distribution d'épaisseur variable.

6. Ensemble pale d'éolienne selon la revendication 5, dans lequel la distribution d'épaisseur est asymétrique autour d'un point central (45) de la protection (40).

7. Ensemble pale d'éolienne selon la revendication 1 dans lequel la protection (40) présente une distribution d'épaisseur variable définie entre la surface intérieure (43) et la surface extérieure (44) et la protection présente une épaisseur maximale à un emplacement entre le bord face sous le vent et le bord face au vent ; et
la protection présente un point central (45) entre le bord face sous le vent (41) et le bord face au vent (42) et la distribution d'épaisseur est asymétrique autour du point central.

8. Ensemble pale d'éolienne selon la revendication 7, dans lequel l'épaisseur maximale est un maximum local.

9. Ensemble pale d'éolienne selon la revendication 7, dans lequel la distribution d'épaisseur présente une zone d'épaisseur maximale constante s'étendant sur une largeur de la protection (40).

10. Ensemble pale d'éolienne selon la revendication 9, dans lequel la zone d'épaisseur maximale constante est asymétrique autour du point central (45).

11. Ensemble pale d'éolienne selon la revendication 9 ou la revendication 10, dans lequel la zone d'épaisseur maximale constante s'étend jusqu'à 95 % de la largeur entre le bord face sous le vent (41) et le bord face au vent (42).

12. Ensemble pale d'éolienne selon l'une quelconque des revendications 7 à 11, dans lequel lors d'un déplacement de la position d'épaisseur maximale vers le bord face sous le vent l'épaisseur de la protection n'augmente pas ; et lors d'un déplacement de la position d'épaisseur maximale vers le bord face au vent l'épaisseur de la protection n'augmente pas.

13. Ensemble pale d'éolienne selon l'une quelconque des revendications 7 à 12, dans lequel il n'y a pas de discontinuités dans la distribution d'épaisseur entre le bord face sous le vent (41) et le bord face au vent (42).

14. Ensemble pale d'éolienne selon l'une quelconque des revendications 1 à 13, dans lequel la protection (40) comprend une bande.

15. Ensemble pale d'éolienne selon l'une quelconque des revendications 1 à 13, dans lequel la protection (40) comprend un polymère coulé.
